# FASCICULE DE BREVET EUROPEEN

(11) **EP 3 732 352 B1**
(45) Date de publication et mention de la délivrance du brevet: **05.03.2025**
(21) Numéro de dépôt: 18842453.5
(22) Date de dépôt: 26.12.2018
(51) Int. Cl.: F01D 5/28, C04B 41/52, F01D 25/00

(54) **PIÈCE REVÊTUE D'UNE COMPOSITION DE PROTECTION CONTRE LES CMAS À FISSURATION CONTROLÉE, ET PROCÉDÉ DE TRAITEMENT CORRESPONDANT**
MIT EINER ZUSAMMENSETZUNG ZUM SCHUTZ GEGEN CMAS MIT KONTROLLIERTER RISSBILDUNG BESCHICHTETES TEIL UND ENTSPRECHENDES BEHANDLUNGSVERFAHREN
PART COATED WITH A COMPOSITION FOR PROTECTION AGAINST CMAS WITH CONTROLLED CRACKING, AND CORRESPONDING TREATMENT METHOD

(30) Priorité: 27.12.2017 FR 1763278
(43) Date de publication de la demande: 04.11.2020
(73) Titulaire: SAFRAN, 75015 Paris (FR)
(72) Inventeur: BIANCHI, Luc, Réau 77550 MOISSY-CRAMAYEL (FR); JOULIA, Aurélien, Réau 77550 MOISSY-CRAMAYEL (FR); MALIE, André, Hubert, Louis, Réau 77550 MOISSY-CRAMAYEL (FR); BERNARD, Benjamin Dominique Roger Joseph, 37300 JOUE-LES-TOURS (FR)
(74) Mandataire: Regimbeau
(86) Numéro de dépôt international: PCT/FR2018/053549
(87) Numéro de publication internationale: WO 2019/129996

(56) Documents cités:
- EP-A2- 2 202 212
- WO-A1-2011/123432
- US-A1- 2013 224 457

## Description

### DOMAINE TECHNIQUE DE L'INVENTION

L'invention concerne une pièce de de turbomachine, telle qu'une aube de turbine haute pression ou une paroi de chambre de combustion.

### ETAT DE LA TECHNIQUE

Dans un turboréacteur, les gaz d'échappement générés par la chambre de combustion peuvent atteindre des températures élevées, supérieures à 1200°C, voire 1600°C. Les pièces du turboréacteur, en contact avec ces gaz d'échappement, doivent être capables de conserver leurs propriétés mécaniques à ces températures élevées. Notamment, les composants des turbines haute pression, ou TuHP, doivent être protégés contre une élévation trop importante de température de surface, afin d'en garantir l'intégrité fonctionnelle et d'en limiter l'oxydation et la corrosion.

Il est connu de fabriquer certaines pièces du turboréacteur en « superalliage ». Les superalliages constituent une famille d'alliages métalliques à haute résistance pouvant travailler à des températures relativement proches de leurs points de fusion (typiquement 0,7 à 0,8 fois leurs températures de fusion). Il est par ailleurs connu de fabriquer des pièces en composites à matrice céramique, ou CMC.

Il est connu de recouvrir la surface de pièces faites desdits matériaux d'un revêtement jouant un rôle de barrière thermique, et/ou un rôle de barrière environnementale.

Une barrière thermique ou environnementale comprend généralement une couche thermiquement isolante dont une fonction est de limiter la température de surface du composant revêtu, et une couche protectrice permettant de protéger le substrat de l'oxydation et/ou de la corrosion.

La couche céramique recouvre généralement la couche protectrice. A titre d'exemple, la couche thermiquement isolante peut être en zircone yttriée. Une sous-couche métallique peut être déposée avant la couche protectrice, et la couche protectrice peut être formée par oxydation de la sous-couche métallique. La sous-couche métallique assure une liaison entre la surface du substrat en superalliage et la couche protectrice : la sous-couche métallique est parfois appelée « sous-couche d'accroche ». En outre, la couche protectrice peut être pré-oxydée avant le dépôt de la couche thermiquement isolante, afin de former une couche d'alumine dense appelée usuellement Thermally Grown Oxide (TGO) pour favoriser l'accroche de la couche thermiquement isolante et renforcer la fonction de protection contre l'oxydation et la corrosion.

Il est crucial de garantir une durée de vie satisfaisante des barrières thermiques et environnementales tout au long des cycles de fonctionnement des pièces de turbomachine. Cette durée de vie est notamment conditionnée par la résistance de la barrière au cyclage thermique d'une part, et à des agressions environnementales telles que l'érosion et la corrosion d'autre part. La barrière thermique ou environnementale est susceptible de se dégrader rapidement en présence de particules riches en composés inorganiques de type silice, ou encore, si elle est située dans une atmosphère riche en composés communément appelés CMAS, comprenant notamment les oxydes de calcium, magnésium, aluminium et silicium. Les CMAS sont susceptibles de s'infiltrer à l'état fondu dans la barrière thermique ou environnementale, notamment dans des fissurations formées dans le volume interne des couches de la barrière. Une fois infiltrées, les particules de composés CMAS peuvent provoquer une dissolution chimique partielle de la barrière, ou encore, se rigidifier au sein de la barrière et abaisser les propriétés de tenue mécanique de la barrière thermique ou environnementale.

Pour prévenir la pénétration de contaminants liquides à haute température tels que des composés CMAS au sein des couches de revêtement, on connaît des dépôts anti-CMAS favorisant la formation d'une couche barrière étanche à la surface de la pièce revêtue, par réaction chimique spontanée entre des espèces chimiques des dépôts anti-CMAS et les composés CMAS. La couche barrière étanche ainsi formée bloque la progression des composés CMAS fondus au sein de la pièce à protéger. De tels dépôts anti-CMAS peuvent être mis en œuvre soit directement sur le substrat pour former une barrière thermique ou environnementale complète, soit dans une couche de fonctionnalisation. La cinétique de réaction entre le dépôt anti-CMAS et les composés CMAS est alors en compétition avec la cinétique d'infiltration des composés CMAS au sein du revêtement, et notamment au sein de fissures du revêtement.

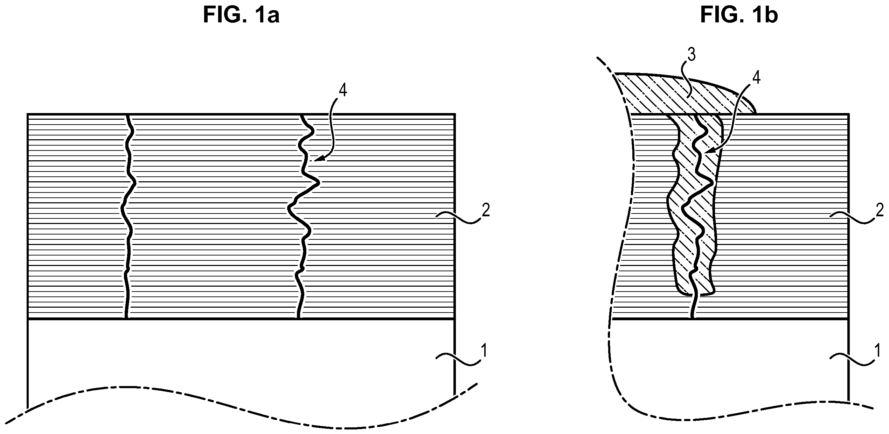

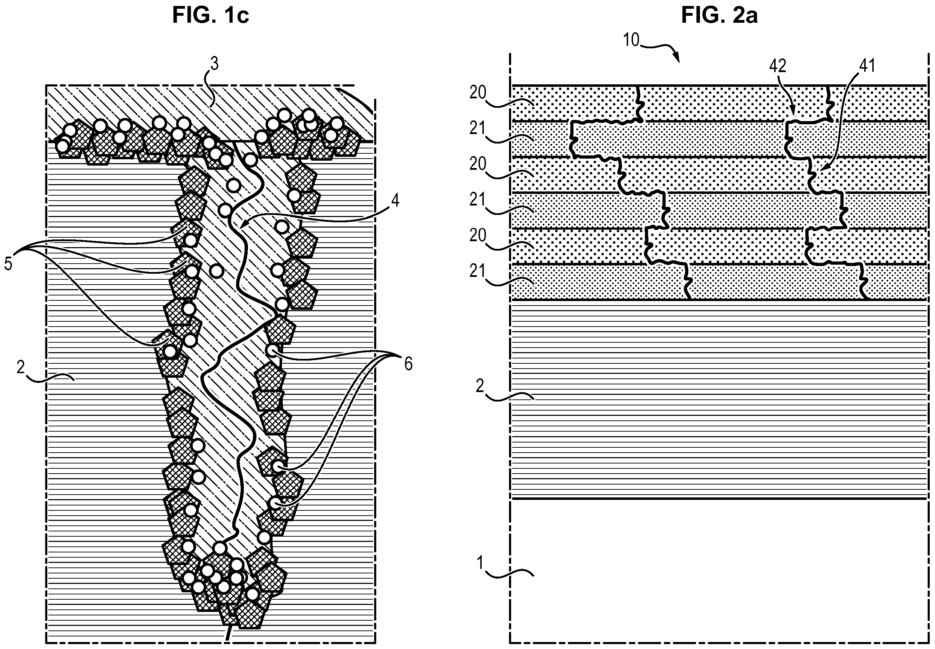

Toutefois, l'efficacité des dépôts, anti-CMAS est diminuée lorsque la pièce à protéger présente une fissuration transverse. Dans toute la suite, une « fissuration transverse » désigne une pluralité de fissures ayant une orientation générale sensiblement orthogonale au plan tangent à la surface de la pièce revêtue. Les Figures 1a, 1b et 1c annexées illustrent le phénomène de pénétration capillaire des composés CMAS de l'air ambiant dans un réseau de fissures au sein de la surface externe d'une pièce. Sur **la** **Figure 1a****,** la pièce, pouvant être une aube de turbine haute pression de turbomachine, présente à sa surface une couche 2 de dépôt anti-CMAS, d'épaisseur sensiblement uniforme. La couche anti-CMAS comprend une fissure 4 sensiblement transverse. Cette fissure 4 fait partie d'un réseau plus important de fissuration transverse comprenant des fissures traversantes pour la couche 2, orthogonales à la surface et peu déviées. Sur la **Figure 1b****,** des particules de composés CMAS, fondues du fait de la température de surface élevée au niveau de la couche 2 au cours du fonctionnement de l'aube, forment une phase liquide 3 à la surface de la couche 2. Cette phase liquide 3 est partiellement infiltrée dans la fissure 4. Sur la **Figure 1c****,** qui représente le système à un état postérieur à celui de la figure 1b, les espèces chimiques présentes dans la couche 2 de dépôt anti-CMAS ont réagi avec les composés CMAS infiltrés pour former une phase bloquante 5 sur le pourtour de la fissure 4. La phase bloquante 5 est schématisée ici par un réseau de formes pentagonales contiguës. Cette phase bloquante 5 bloque l'infiltration des composés CMAS de la phase liquide 3. En outre, une phase secondaire 6 peut se former par endroits, cette phase secondaire 6 étant figurée par les formes circulaires représentées sur la Figure 1c. Ici, la fissure 4 étant sensiblement transverse, la phase liquide 3 s'infiltre rapidement sur toute l'épaisseur de la couche de dépôt anti-CMAS 2, la cinétique d'infiltration des composés CMAS fondus l'emportant sur la cinétique de la réaction chimique conduisant à la formation de la phase bloquante. La couche 2 s'en trouve fragilisée, et la durée de vie de la pièce s'en trouve réduite.

Il existe donc un besoin pour un traitement de surface de pièce de turbomachine, comprenant l'application d'une barrière thermique et/ou environnementale dont l'intégrité serait garantie tout au long de la vie de la pièce, dans un environnement chargé en composés CMAS. Il se pose notamment le problème de la tenue mécanique de couches de dépôt anti-CMAS disposées en surface des pièces de turbine, face à l'infiltration de composés CMAS fondus. Une pièce de turbomachine selon l'art antérieur est divulguée dans WO2011/123432.

### PRESENTATION GENERALE DE L'INVENTION

L'invention répond au besoin mis en exergue ci-avant par la fourniture d'une pièce de turbomachine selon la revendication 1

Une pièce selon l'invention présente ainsi une couche de revêtement anti-CMAS favorisant la déviation d'éventuelles fissures dans une direction sensiblement parallèle à la surface de la pièce. La pénétration capillaire des composés de type CMAS fondus au cours du fonctionnement de la pièce est destinée à être minimisée. En effet, la phase liquide formée par les composés CMAS fondus, au lieu de se propager au sein des fissures selon une direction sensiblement orthogonale à l'épaisseur des couches successives de revêtement et d'atteindre rapidement le substrat de la pièce, s'infiltre dans des tortuosités formées par les fissures le long d'interfaces de couches élémentaires. La cinétique de la réaction de formation d'une phase bloquante faisant intervenir des composés chimiques du revêtement est favorisée par rapport à la cinétique d'infiltration des composés CMAS fondus.

Un autre avantage apporté par l'invention est d'autoriser la fissuration des couches de revêtement anti-CMAS tout en assurant une bonne tenue mécanique du fait de l'amoindrissement des composés CMAS infiltrés. La présence de fissures au sein du revêtement permet d'accommoder des déformations thermomécaniques à la surface de la pièce, sans engendrer de rupture plus importante qui nuirait à la tenue de la pièce.

Des caractéristiques additionnelles et non-limitatives d'une pièce de turbomachine selon l'invention sont comme suit, prises seules ou en l'une quelconque de leurs combinaisons techniquement possibles :
- les couches élémentaires du premier ensemble pouvant par exemple présenter une ténacité comprise entre 0,5 et 1,5 Mpa.m^{1/2} et les couches élémentaires du deuxième ensemble pouvant présenter une ténacité comprise entre 1,5 et 2,2 Mpa.m^{1/2} .

Le changement de ténacité entre deux couches élémentaires consécutives induit une fissuration préférentielle dans le sens de l'interface entre les couches consécutives, notamment en fonctionnement et éventuellement en fin de fabrication après refroidissement ;
- les couches élémentaires du deuxième ensemble comprennent un matériau pris parmi la liste suivante : YSZ, Y2O3-ZrO2-Ta2O5, BaZrO3, CaZrO3, SrZrO3, ou comprennent un mélange de plusieurs de ces matériaux ;
- les couches élémentaires du premier ensemble comprennent un matériau pris parmi la liste suivante : RE2Zr2O7 avec RE un matériau de la famille des terres rares, Ba(Mg1/3Ta2/3)O3, La(Al1/4Mg1/2Ta1/4)O3, ou comprennent un mélange de plusieurs de ces matériaux ;
les couches élémentaires du premier ensemble pouvant présenter un coefficient de dilatation thermique compris entre 3,5 et 6,0 10⁻⁶ K⁻¹ et les couches élémentaires du deuxième ensemble pouvant présenter un coefficient de dilatation thermique compris entre 7,0 et 12,0 10⁻⁶ K⁻¹.

Le changement de coefficient de dilatation entre deux couches élémentaires consécutives induit une fissuration préférentielle dans le sens de l'interface entre les couches consécutives, notamment en fonctionnement et éventuellement en fin de fabrication après refroidissement ;
- les couches élémentaires du deuxième ensemble comprennent un matériau pris parmi la liste suivante : YSZ, Y2O3-ZrO2-Ta2O5, BaZrO3, CaZrO3, SrZrO3, RE2Zr2O7 avec RE un matériau de la famille des terres rares, Ba(Mg1/3Ta2/3)O3, La(Al1/4Mg1/2Ta1/4)O3, YAG, ou comprennent un mélange de plusieurs de ces matériaux ;
- les couches élémentaires du premier ensemble comprennent du RE2Si2O7 ou du RE2SiO5 avec RE un matériau de la famille des terres rares, ou comprennent un mélange de ces matériaux ;
- le rapport de l'épaisseur cumulée des couches élémentaires du premier ensemble sur l'épaisseur cumulée des couches élémentaires du deuxième ensemble est compris entre 1:2 et 2:1 ;
- l'épaisseur totale de la couche de revêtement de protection est comprise entre 20 et 500 µm, préférentiellement entre 20 et 300 µm ;
- la pièce est une aube mobile de turbine, ou un distributeur de turbine haute pression, ou un anneau de turbine haute pression, ou une paroi de chambre de combustion.

Selon un deuxième aspect, l'invention concerne un procédé de traitement d'une pièce de turbomachine comprenant des étapes de dépôt par projection thermique d'une pluralité de couches élémentaires, à la surface d'un substrat de la pièce, le substrat étant formé en matériau métallique, ou en matériau composite, pour produire une couche de revêtement de protection contre l'infiltration de composés de type CMAS,
le procédé comprenant des étapes de dépôt à la surface du substrat de couches élémentaires appartenant à un premier ensemble, les dites étapes étant intercalées entre des étapes de dépôt de couches élémentaires appartenant à un deuxième ensemble,
les couches élémentaires du premier ensemble présentant des ténacités qui diffèrent d'au moins 0,7 Mpa.m^{1/2} par rapport aux ténacités des couches élémentaires du deuxième ensemble,
ou les couches élémentaires du premier ensemble présentant des coefficients de dilatation thermique qui diffèrent d'au moins 3,5 10⁻⁶ K⁻¹ par rapport aux coefficients de dilatation thermique des couches élémentaires du deuxième ensemble.

Le procédé peut présenter les caractéristiques additionnelles et non-limitatives suivantes :
- les étapes de dépôt de couches élémentaires étant réalisées selon la technique de la projection thermique plasma de suspension, ou Suspension Plasma Spraying (SPS), ou selon l'une des autres techniques suivantes : projection plasma à pression atmosphérique (APS), projection plasma de solutions de précurseurs (SPPS), projection plasma sous atmosphère inerte ou pression réduite (IPS, VPS, VLPPS), PVD et EB-PVD, HVOF et HVOF de suspension (HVSFS), ou selon une combinaison de plusieurs de ces techniques ;
- Le procédé comporte en outre une étape, préliminaire au dépôt de couches élémentaires, de dépôt à la surface du substrat d'une couche de revêtement formant barrière thermique, et/ou de dépôt d'une couche de revêtement formant barrière environnementale, et/ou de dépôt d'une sous-couche de liaison favorisant l'accrochage d'une couche de revêtement ;
- une étape de dépôt de couche élémentaire est réalisée par un passage de torche sans refroidissement, et l'étape de dépôt de couche élémentaire directement consécutive, ou l'étape de dépôt de couche élémentaire directement antécédente, est réalisée par un passage de torche avec refroidissement, le refroidissement étant réalisé à l'aide de buses à air comprimé, ou à l'aide de buses à cryogénie de dioxyde de carbone liquide, la couche de revêtement pouvant alors être réalisée avec des inter-passes entre des passages de torche sans refroidissement et des passages de torche avec refroidissement immédiatement consécutifs ou antécédents.

Le procédé de traitement peut comporter en outre une étape dans laquelle un choc thermique au niveau de la surface de la pièce de turbomachine est provoqué entre le dépôt d'une première couche élémentaire et le dépôt d'une deuxième couche élémentaire successive, ledit choc thermique étant de préférence obtenu par un passage de torche sans refroidissement après dépôt de la première couche élémentaire, et un passage de torche avec refroidissement pour la deuxième couche élémentaire.

Cette dernière étape permet de fragiliser l'interface entre la première couche élémentaire et la deuxième couche élémentaire de sorte à favoriser la propagation de fissures au sein du plan de l'interface.

### PRESENTATION GENERALE DES FIGURES

D'autres caractéristiques, buts et avantages de l'invention ressortiront de la description qui suit, laquelle est illustrative et non limitative, et des figures annexées parmi lesquelles les **Figures 1a, 1b** **et** **1c** déjà décrites ci-avant, ainsi que les autres dessins suivants :
La **Figure 2a** représente schématiquement la surface d'une pièce de turbomachine selon l'invention, présentant au sein d'une couche de revêtement une fissuration à la fois transverse et horizontale.
La **Figure 2b** représente schématiquement la pièce de la Figure 2a soumise à une infiltration de composés CMAS fondus.
La **Figure 2c** représente schématiquement l'avancée du front d'infiltration des composés CMAS fondus dans une fissure de la pièce des Figures 2a et 2b.
La **Figure 3** est une vue d'une fissure partiellement horizontale entre deux couches élémentaires de ténacités différentes.
La **Figure 4** représente les étapes d'un procédé de fabrication selon un mode de réalisation d'un procédé de l'invention.
La **Figure 5** représente les étapes d'un procédé de fabrication selon un mode de réalisation alternatif d'un procédé de l'invention.
La **Figure 6** représente les étapes d'un procédé de fabrication selon un autre mode de réalisation alternatif d'un procédé de l'invention.
La **Figure 7a** représente un empilement multicouche de protection contre les CMAS selon un premier exemple.
La **Figure 7b** représente un empilement multicouche de protection contre les CMAS selon un deuxième exemple.
La **Figure 7c** représente un empilement multicouche de protection contre les CMAS selon un troisième exemple.
La **Figure 7d** représente un empilement multicouche de protection contre les CMAS selon un quatrième exemple.

### DESCRIPTION DETAILLEE D'UN MODE DE REALISATION

On a représenté **en** **Figure 2a** une pièce de turbomachine 10 selon un mode de réalisation possible de l'invention. La pièce 10 peut comprendre un substrat 1 en matériau métallique, par exemple un superalliage à base nickel ou à base cobalt tel que les superalliages connus AM1, CM-NG, CMSX4 et ses dérivés ou encore le superalliage René et ses dérivés. La pièce 10 peut encore comprendre un substrat 1 en composite matrice céramique (aussi noté CMC). La pièce 10 peut être toute pièce de turbomachine exposée à du cyclage thermique et exposée à des composés CMAS à haute température. La pièce 10 peut notamment être une aube mobile de turbine, ou un distributeur de turbine haute pression, ou un anneau de turbine haute pression, ou une paroi de chambre de combustion.

Le substrat 1 peut être recouvert d'une couche de liaison alumino-formeuse (non représentée sur la Figure 2a) incluant par exemple des alliages de type MCrAlY (M = Ni, Co, Ni et Co), des aluminures de nickel type β-NiAl (modifiés ou non par du Pt, Hf, Zr, Y, Si ou des combinaisons de ces éléments), des aluminures d'alliages γ-Ni- γ'-Ni3Al (modifiés ou non par du Pt, Cr, Hf, Zr, Y, Si ou des combinaisons de ces éléments), les phases MAX (Mₙ₊₁AXₙ (n=1,2,3) où M = Sc, Y, La, Mn, Re, W, Hf, Zr, Ti; A = groupes IIIA, IVA, VA, VIA ; X = C,N), ou toute autre sous-couche de liaison adaptée, ainsi que des mélanges des compositions citées ci-avant. Par ailleurs, le substrat 1 peut être recouvert (ainsi que l'éventuelle couche de liaison alumino-formeuse) d'une couche de revêtement formant barrière thermique, ou formant barrière environnementale, ou encore formant barrière thermique et environnementale. Une telle couche de revêtement n'est pas représentée sur la Figure 2a.

Une barrière thermique peut comprendre de la zircone yttriée, présentant par exemple un taux de 7 à 8 % de Y₂O₃ en masse. La mise en forme d'une telle barrière thermique peut être réalisée par exemple par APS (projection plasma à pression atmosphérique), SPS (projection plasma de suspension), SPPS (projection plasma de solutions à précurseurs), HVOF *(« High Velocity Oxi-Fuel* »), procédé sol-gel, HVSFS *(« High-Velocity Suspension Flame Spraying »),* EB-PVD *(« Electron Beam Physical Vapor Deposition »),* ou tout autre procédé connu pour la mise en forme de barrières thermiques.

Une barrière environnementale est avantageusement utilisée pour protéger un substrat en CMC. Un système barrière thermique et environnementale peut comprendre un ou plusieurs matériaux parmi le groupe suivant : MoSi₂, BSAS (BaO₁₋ₓ-SrOₓ-Al₂O₃-2SiO₂), Mullite (3 Al₂O₃-2 SiO₂), mono-et di-silicates de terres rares (terre rare = Y, La, Ce, Pr, Nd, Pm, Sm, Eu, Gd, Tb, Dy, Ho, Er, Tm, Yb, Lu), zircones totalement ou partiellement stabilisées voir dopées, ou toute autre composition connue pour une barrière thermique environnementale.

Selon l'invention, le substrat 1 est recouvert partiellement ou totalement (ainsi que l'éventuelle couche de liaison alumino-formeuse, et/ou l'éventuelle couche barrière thermique et/ou environnementale) d'une épaisseur de couche 2 de revêtement de protection contre l'infiltration de composés de type CMAS. La couche 2 de protection comprend une pluralité de couches élémentaires. On parlera dans la suite de couche élémentaire, pour désigner une épaisseur de couche présentant une composition chimique sensiblement homogène et des caractéristiques physico-chimiques sensiblement homogènes (par exemple une ténacité homogène et un coefficient de dilatation thermique homogène). La couche 2 comprend avantageusement un nombre de couches élémentaires compris entre 3 et 50, et préférentiellement entre 3 et 35. Une épaisseur totale de la couche 2 est avantageusement comprise entre 20 et 500 micromètres, préférentiellement entre 20 et 300 micromètres.

Si une couche de revêtement formant barrière thermique ou environnementale est présente sur le substrat, on peut parler de couche de fonctionnalisation pour désigner la couche de protection anti-CMAS 2. En alternative, la couche 2 peut être mise en œuvre directement sur le substrat 1 en l'absence d'autre couche de revêtement formant barrière thermique ou environnementale.

Parmi les couches élémentaires au sein de la couche 2 et selon le mode de réalisation illustré en Figure 2a, on distingue des couches élémentaires 20 d'un premier ensemble de couches élémentaires et des couches élémentaires 21 d'un deuxième ensemble de couches élémentaires. Les couches élémentaires 20 sont intercalées entre les couches élémentaires 21. Dans l'exemple illustré, la couche 2 compte uniquement une alternance de couches élémentaires 20 et de couches élémentaires 21. Toutefois, selon une variante non illustrée, des couches élémentaires appartenant à un troisième type de couches, ou plus, pourraient également être présentes au sein de la couche 2, soit intercalées avec les couches élémentaires 20 et 21, soit au-dessus ou en-dessous d'une série de couches élémentaires 20 et 21. L'épaisseur d'une couche élémentaire 20 ou 21 est de préférence comprise entre 0,1 micromètre et 50 micromètres. On a représenté les trois couches élémentaires 20 et les trois premières couches élémentaires 21 les plus proches de la surface en taille agrandie, et les couches élémentaires consécutives restantes avec une épaisseur moindre ; toutefois une pièce selon l'invention ne présente pas nécessairement cette différence d'épaisseur entre les couches élémentaires, ce mode de représentation étant ici choisi pour illustrer des fissurations.

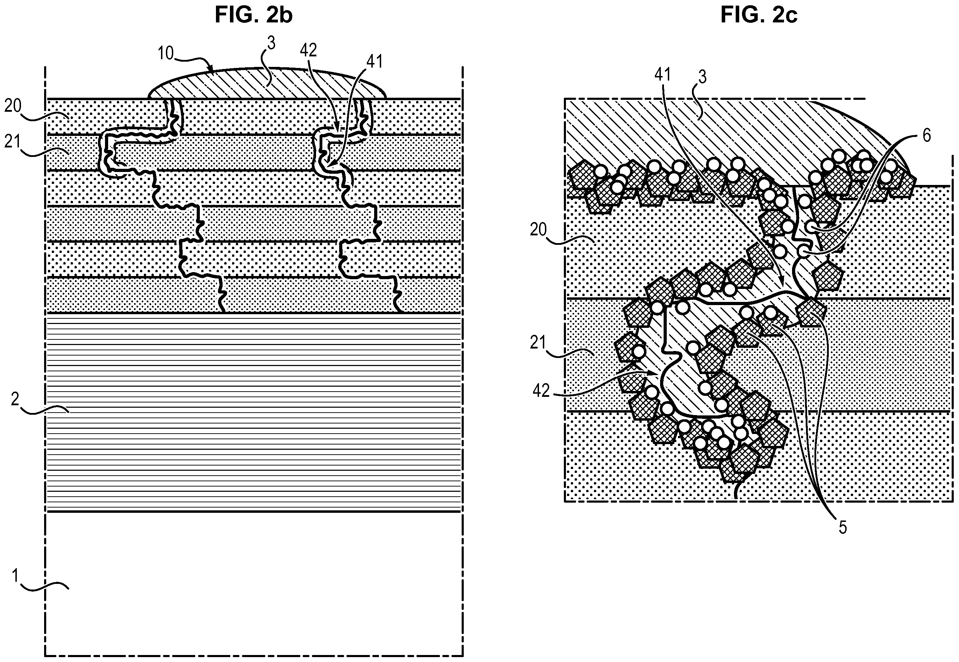

Selon l'invention, les interfaces de contact entre une couche élémentaire 20 et une couche élémentaire 21 sont adaptées pour favoriser la propagation de fissures le long de ladite interface. Avec l'orientation de la Figure 2, les fissures ainsi destinées à se former, le long de l'usure de la pièce 10 ou encore lors d'un refroidissement de la pièce 10 après fabrication, présenteront une orientation sensiblement horizontale. Chaque zone de contact entre une couche élémentaire 20 et une couche élémentaire 21 forme ainsi une interface mécaniquement fragilisée favorisant la propagation de fissures. Une description en détail des couches élémentaires 20 et 21 figure ci-après en relation à l'Exemple 1.

Du fait de la présence des interfaces mécaniquement fragilisées entre les couches élémentaires 20 et 21, au fil de l'usure de la pièce, un réseau de fissuration est destiné à se développer avec une tortuosité plus importante que pour une couche 2 qui serait constituée d'une épaisseur de composition uniforme. On a représenté sur la Figure 2a un tel réseau de fissures, comprenant des fissurations 42 orientées dans le plan de l'interface entre deux couches successives, et des fissurations 41 orientées transversalement dans le sens de l'épaisseur de la couche 2. On se référera dans la suite à des fissures « horizontales » pour les fissures 42 et à des fissures « transverses » pour les fissures 41. La couche 2 forme ainsi une couche de protection anti-CMAS à fissuration contrôlée. On comprendra aisément que la pièce pourrait également comprendre des fissures ayant d'autres orientations.

Le même système est représenté schématiquement sur la **Figure 2b****,** dans un environnement où des composés contaminants liquides à haute température de type CMAS sont présents. Du fait de la température de surface élevée au niveau de la couche 2 au cours du fonctionnement de l'aube, forment une phase liquide 3 à la surface de la couche 2. Cette phase liquide 3 s'infiltre peu à peu au fil du temps sur l'épaisseur de la couche 2, par l'intermédiaire des fissurations 42 et 41. La présence de fissurations 42 horizontales, en prime des fissurations 41 transverses, provoque un allongement du chemin d'infiltration de la phase liquide 3. Au cours d'une exposition de la pièce 1 à des composés CMAS fondus, il s'écoule plus de temps avant qu'une phase liquide 3 n'atteigne le substrat 1.

La **Figure 2c** est une vue schématique rapprochée de l'interface entre la phase liquide 3 et des fissures 42 et 41 proches de la surface de la pièce de la Figure 2b. Au cours de l'infiltration de la phase liquide 3, il existe une compétition entre la cinétique de progression de ladite phase 3 au sein des fissures, et la cinétique de réaction des CMAS fondus infiltrés avec les composés anti-CMAS au sein des couches élémentaires 20 et 21 - des exemples de composés chimiques anti-CMAS étant exposés ci-après. Ladite réaction entre CMAS fondus et composés anti-CMAS, pouvant être par exemple une réaction de cristallisation, forme une phase « bloquante » 5 sur le pourtour du chemin d'infiltration des CMAS fondus. La phase bloquante 5 bloque la progression des composés CMAS fondus. On peut encore parler de « couche barrière étanche ». Une phase secondaire 6 peut également être formée sur le pourtour des fissures.

Comparativement à une pièce obtenue par un traitement consistant à combler les fissures, par exemple avec une céramique hautement réactive, la pièce des Figures 2a à 2c est avantageuse car la couche de dépôt anti-CMAS n'est pas rendue mécaniquement rigide. En outre, la présence de fissures au sein du revêtement anti-CMAS permet d'accommoder des déformations thermomécaniques subies par la pièce au cours de son fonctionnement, notamment provoquées par le cyclage thermique. Cela constitue un avantage supplémentaire d'une pièce de l'invention, par rapport à une pièce qui aurait subi un traitement visant au comblement des fissures.

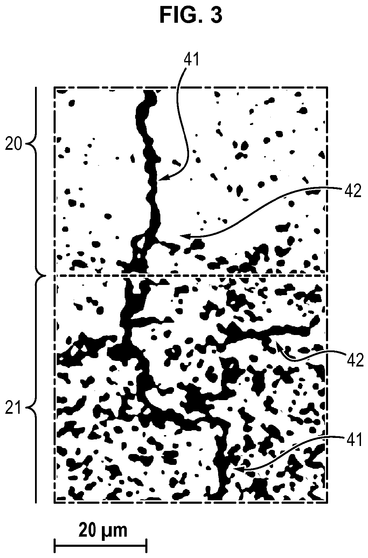

La **Figure 3** représente une vue au microscope d'une interface fissurée entre une couche élémentaire 20 et une couche élémentaire 21. On constate que le réseau de fissures formé au cours du cyclage thermique de la pièce peut être plus complexe que la forme simplifiée représentée sur les Figures 2a à 2c. Notamment, des fissures horizontales 42 peuvent être formées au niveau de l'interface, matérialisée ici en pointillés autour du périmètre de la vue au microscope, mais peuvent aussi être formées à des positions décalées par rapport à ladite interface.

### Procédé de fabrication d'une pièce à fissuration contrôlée - Exemple 1

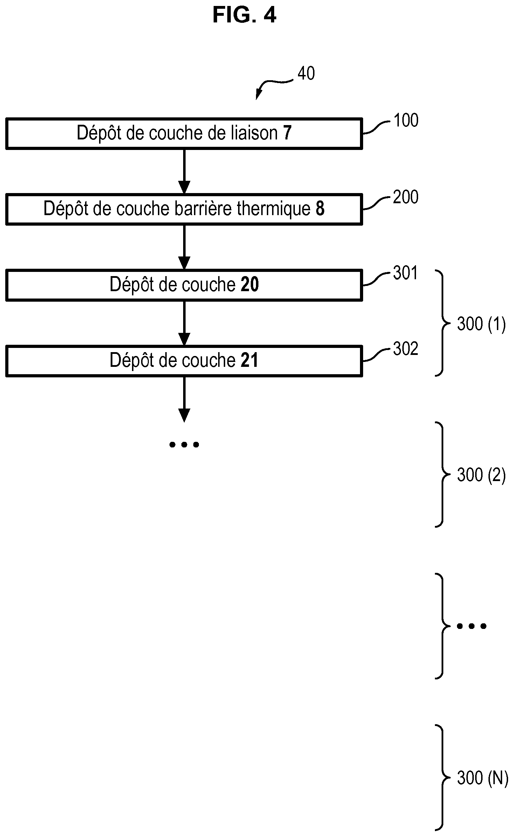

Un procédé 40 de traitement pour obtenir une pièce à fissuration contrôlée, c'est-à-dire favorisant la formation de fissures au niveau d'interfaces entre des couches élémentaires de revêtement, selon un premier exemple de mise en œuvre, est illustré en **Figure 4****.** On considère qu'un substrat de la pièce à traiter est déjà formé en amont dudit procédé, par exemple formé en matériau métallique ou en composite matrice céramique (CMC).

A une étape 100 optionnelle, une couche de liaison alumino-formeuse 7 est déposée à la surface du substrat, pour favoriser l'adhérence de la couche suivante, comme décrit ci-avant en relation à la Figure 2a.

A une étape 200 optionnelle, une couche 8 formant barrière thermique, ou barrière environnementale (EBC), ou barrière thermico-environnementale (TEBC) est formée à la surface du substrat, ou à la surface de la couche de liaison 7. Cette couche 8 peut notamment être obtenue par toute technique de dépôt par projection thermique, comme décrit ci-avant en relation à la Figure 2a. L'étape 200 est notamment non essentielle si les couches élémentaires déposées ultérieurement jouent le rôle de barrière thermique et/ou de barrière environnementale.

On met ensuite en œuvre une étape 300 de formation d'une couche 2 de revêtement de protection contre l'infiltration de composés de type CMAS. L'étape 300 comporte une succession de sous-étapes 300(1), 300(2) ... 300(N), chacune de ces sous-étapes comportant un dépôt 301 d'une couche élémentaire 20, suivi d'un dépôt 302 d'une couche élémentaire 21. Les dépôts 301 et 302 sont préférentiellement réalisés par des techniques de projection thermique, par exemple, par APS, SPS, SPPS, HVOF, procédé sol-gel, HVSFS, EB-PVD, projection plasma sous atmosphère inerte ou sous pression réduite (IPS ou *« Inert Plasma Spraying »,* VPS ou *« Vacuum Plasma Spraying »,* VLPPS ou « *Very Low Pressure Plasma Spraying »).*

Ici, les couches élémentaires 20 présentent des ténacités différentes des couches élémentaires 21, ce qui crée des interfaces mécaniquement fragilisées entre lesdites couches. De manière avantageuse, les ténacités des couches élémentaires 20 diffèrent d'au moins 0,7 Mpa.m^{1/2} par rapport aux ténacités des couches élémentaires 21. A titre d'exemple, les couches élémentaires 20 présentent une ténacité comprise entre 0,5 et 1,5 Mpa.m^{1/2} et les couches élémentaires 21 présentent une ténacité comprise entre 1,5 et 2,2 Mpa.m^{1/2.} Les couches élémentaires 20 n'ont pas nécessairement toutes la même ténacité, tout comme les couches élémentaires 21.

Dans l'exemple du procédé 40, les couches 20 sont formées en Gd₂Zr₂O₇, avec une ténacité de 1,02 Mpa.m^{1/2,} et les couches 21 sont formées en zircone yttriée ZrO₂ - 7-8%massiqueY₂O₃ (YSZ), avec une ténacité de 2,0 Mpa.m^{1/2}.

Les couches 20 sont formées par projection plasma de suspensions *(« Suspension Plasma Spraying* » ci-après SPS). On utilise pour les étapes 301 une torche « Sinplex Pro » avec un débit volumétrique argon/hélium/dihydrogène de 80/20/5 litres standard par minute ou « slpm » selon l'abréviation courante. On utilise une suspension YSZ/éthanol, avec un débit d'injection de 40 à 50 grammes par minute. La vitesse de dépôt du YSZ est de 2 micromètres d'épaisseur de couche 20 par cycle de dépôt, un cycle étant défini comme un aller-retour de la torche à plasma devant la surface à traiter de la pièce. On réalise trois cycles de dépôt pour le dépôt d'une couche élémentaire 20, qui présente ainsi une épaisseur de 6 micromètres.

Les couches 21 sont formées par SPS à l'aide d'une torche « Sinplex » avec un débit volumétrique argon/hélium/dihydrogène de 80/20/5 slpm. On utilise une suspension Gd₂Zr₂O₇/éthanol, avec un débit d'injection de 40 à 50 grammes par minute. La vitesse de dépôt du Gd₂Zr₂O₇ est de 2 micromètres d'épaisseur de couche 21 par cycle de dépôt. On réalise trois cycles de dépôt pour le dépôt d'une couche élémentaire 21, qui présente ainsi une épaisseur de 6 micromètres.

On utilise un même injecteur de suspension pour réaliser les étapes 301 et 302, avec deux réservoirs de suspension distincts et ouverts alternativement pour communication fluidique avec l'injecteur de suspension : un premier réservoir est ouvert pour les étapes 301 et un deuxième réservoir est ouvert pour les étapes 302.

La couche 2 de revêtement anti-CMAS est réalisée par un enchaînement de 25 étapes 300 (N = 25), pour une épaisseur totale de 300 micromètres. En alternative, une épaisseur de la couche 2 peut être comprise entre 20 et 500 micromètres, préférentiellement entre 20 et 300 micromètres.

En alternative, les étapes 301 et 302 peuvent être mises en œuvre :
- A l'aide d'une torche « Triplex Pro » avec un débit volumétrique argon/hélium/dihydrogène ayant une valeur en slpm prise parmi les valeurs suivantes : 80/20/0, 80/20/5, 80/0/5 ;
- A l'aide d'une torche « Sinplex Pro » avec un débit volumétrique argon/hélium/dihydrogène de valeur en slpm prise parmi les valeurs suivantes : 50/0/5, 40/0/5, 80/20/0, 80/20/5, 80/0/5 ;
- A l'aide d'une torche « F4 » avec un débit volumétrique argon/hélium/dihydrogène de valeur en slpm prise parmi les valeurs suivantes : 45/45/3, 44/10/3, 45/30/5, 40/20/0, 30/50/5.

Ces valeurs peuvent aussi être utilisées pour les procédés 50 et 60 décrits ci-après.

En alternative, les couches 20 peuvent être formées en un matériau pris parmi : RE2Zr2O7 avec RE un matériau de la famille des terres rares, Ba(Mg1/3Ta2/3)O3, La(Al1/4Mg1/2Ta1/4)O3, ou un mélange de plusieurs de ces matériaux.

En alternative, les couches 21 peuvent être formées en un matériau pris parmi : Y2O3-ZrO2-Ta2O5, BaZrO3, CaZrO3, SrZrO3, ou un mélange de plusieurs de ces matériaux.

Selon une variante, l'étape 300 pourrait ne pas comporter uniquement des étapes de dépôt de couche 20 et des étapes de dépôt de couche 21, et pourrait comporter aussi des étapes de dépôt de variétés supplémentaires de couches élémentaires.

De plus, un choc thermique peut optionnellement être provoqué au niveau de la surface de la pièce entre le dépôt d'une couche élémentaire 20 et le dépôt d'une couche élémentaire 21 successive, ou inversement, ledit choc thermique pouvant être obtenu par un passage de torche sans refroidissement après dépôt de la première couche élémentaire, et un passage de torche avec refroidissement pour la deuxième couche élémentaire. Cela a pour effet de fragiliser encore l'interface entre les couches élémentaires 20 et 21 pour favoriser la fissuration horizontale.

### Procédé de fabrication d'une pièce à fissuration contrôlée - Exemple 2

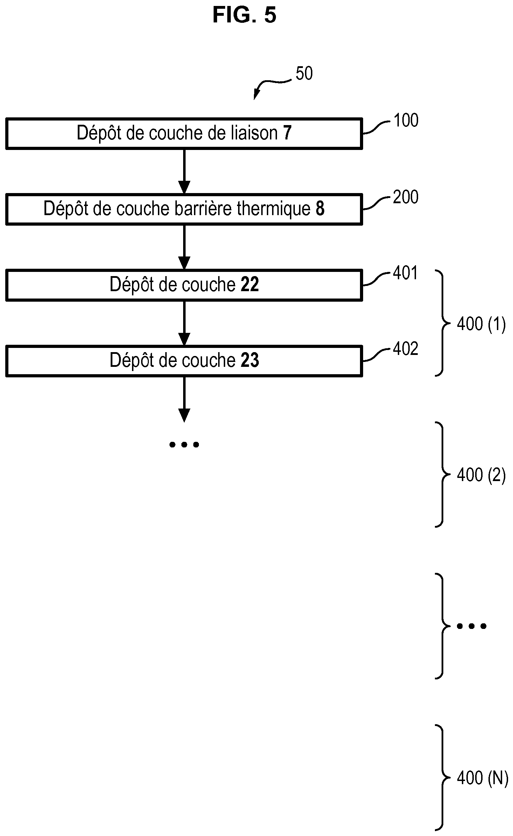

Un procédé 50 de traitement pour obtenir une pièce à fissuration contrôlée selon un deuxième exemple est donné en **Figure 5****.**

Les étapes 100 et 200 optionnelles sont similaires aux étapes du procédé 40.

On met ensuite en œuvre une étape 400 de formation d'une couche 2 de revêtement de protection contre l'infiltration de composés de type CMAS. L'étape 400 comporte une succession de sous-étapes 400(1), 400(2) ... 400(N), chacune de ces sous-étapes comportant un dépôt 501 d'une couche élémentaire 22, suivi d'un dépôt 402 d'une couche élémentaire 23.

Dans l'exemple du procédé 50, les couches 22 sont formées en Y₂Si₂O₇, avec un coefficient de dilatation de 3,9 10⁻⁶ K⁻¹, et les couches 23 sont formées en zircone yttriée ZrO₂ - 7-8%massiqueY₂O₃ (YSZ), avec un coefficient de dilatation de 11,5 10⁻⁶ K⁻¹. Les couches 22 et 23 sont formées par SPS à l'aide d'une torche « Sinplex Pro » avec un débit volumétrique argon/hélium/dihydrogène de 40/0/5 slpm. On utilise une suspension Y₂Si₂O₇/éthanol pour les couches 22 et YSZ/éthanol pour les couches 23, avec un débit d'injection de 40 à 50 grammes par minute. La vitesse de dépôt du YSZ est de 2 micromètres d'épaisseur de couche 23 par cycle d'injection. On réalise trois cycles d'injection pour le dépôt d'une couche élémentaire 23, qui présente ainsi une épaisseur de 6 micromètres.

La vitesse de dépôt du Y₂Si₂O₇ est de 1 micromètres d'épaisseur de couche 22 par cycle d'injection. On réalise trois cycles d'injection pour le dépôt d'une couche élémentaire 22, qui présente ainsi une épaisseur de 3 micromètres.

On utilise un même injecteur de suspension pour réaliser les étapes 401 et 402, avec deux réservoirs de suspension distincts et ouverts alternativement pour communication fluidique avec l'injecteur de suspension.

La couche 2 de revêtement anti-CMAS est réalisée par un enchaînement de 34 itérations d'étapes 400 (N = 34), pour une épaisseur totale de 300 micromètres environ. De même que pour le procédé 40, des chocs thermiques peuvent être provoqués pour fragiliser davantage les interfaces entre couches élémentaires.

En alternative, les couches élémentaire 22 comprennent du RE₂Si₂O₇ ou du RE₂SiO₅ avec RE un matériau de la famille des terres rares, ou comprennent un mélange de ces matériaux.

En alternative, les couches élémentaires 23 comprennent un matériau pris parmi la liste suivante : YSZ, Y2O3-ZrO2-Ta2O5, BaZrO3, CaZrO3, SrZrO3, RE2Zr2O7 avec RE un matériau de la famille des terres rares, Ba(Mg1/3Ta2/3)O3, La(Al1/4Mg1/2Ta1/4)O3, YAG, ou comprennent un mélange de ces matériaux.

### Procédé de fabrication d'une pièce à fissuration contrôlée - Exemple 3

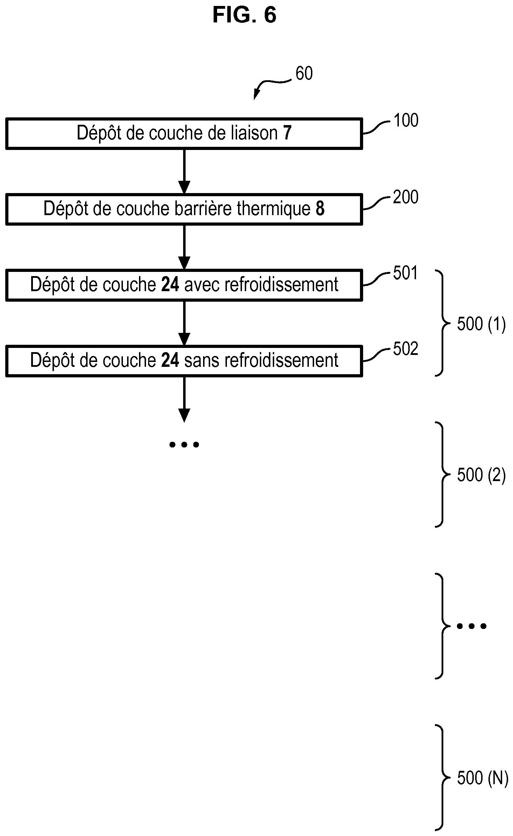

Un procédé 60 de traitement pour obtenir une pièce à fissuration contrôlée selon un troisième exemple est donné en **Figure 6****.**

Les étapes 100 et 200 optionnelles sont similaires aux étapes du procédé 40.

On met ensuite en œuvre une étape 500 de formation d'une couche 2 de revêtement de protection anti-CMAS. L'étape 600 comporte une succession de sous-étapes 500(1) ... 500(N) selon l'épaisseur de couche 2 souhaitée notamment. Chacune desdites sous-étapes comprend un premier dépôt 501 de couche élémentaire 24, et un deuxième dépôt 502 de couche élémentaire 24 selon un protocole différent du dépôt 501.

Entre une étape 501 et une étape 502 successive, ou inversement, on provoque un choc thermique par passage de torche sans refroidissement à la fin de l'étape 501, et un passage de torche avec refroidissement à la fin de l'étape 502.

Le refroidissement est réalisé à l'aide de buses à air comprimé, par exemple 6 buses à 6 bar du type queue de carpe, ou à l'aide de buses à cryogénie de dioxyde de carbone liquide, par exemple deux buses à 25 bar.

On réalise ici un dépôt 500 avec inter-passes, avec une cinématique de dépôt lente (vitesse d'éclairement inférieure à 300 millimètres par seconde) et avec un taux de charge massique important (plus de 20% en masse de particules solides en suspension).

Dans l'exemple particulier du procédé 60, les couches 24 sont formées de YSZ. Les étapes 501 et 502 sont mises en œuvre avec une torche « F4 - MB » avec un débit volumétrique argon/hélium/dihydrogène de 45/45/6 slpm, avec une suspension YSZ/éthanol.

Les dépôts 501 sont réalisés avec un taux de charge massique de 12% et un débit d'injection de 25 à 30 grammes par minute, pour une épaisseur de 10 micromètres (2 micromètres par cycle). Les dépôts 502 sont réalisés avec un taux de charge massique de 20% et un débit d'injection de 45 à 50 grammes par minute, pour une épaisseur de 9 micromètres (3 micromètres par cycle).

On utilise préférentiellement deux injecteurs de suspension distincts pour réaliser les étapes 501 et 502, avec deux réservoirs de suspension distincts et ouverts alternativement.

Dans l'exemple du procédé 60, on réalise N = 16 itérations d'étapes 500, pour une épaisseur totale d'environ 300 micromètres pour la couche 2.

### Exemples de pièces de turbomachine à fissuration contrôlée

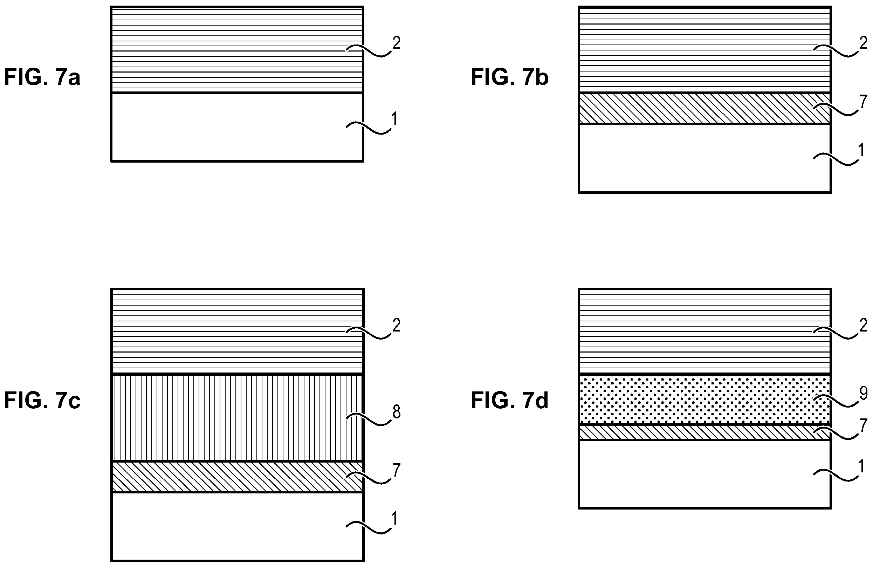

Les Figures 7a à 7d représentent schématiquement plusieurs exemples d'empilements de couches mis en œuvre pour des pièces de turbomachine selon l'invention.

Les couches 2 de dépôt anti-CMAS représentées sur les Figures 7a à 7d sont obtenues par exemple selon tout procédé décrit précédemment.

**La** **Figure 7a** représente une pièce comprenant un substrat 1 en alliage métallique recouvert d'une couche 2 de revêtement anti-CMAS. Dans cet exemple de réalisation, la couche 2 peut jouer à la fois le rôle de barrière thermique et celui de dépôt anti-CMAS.

Sur la **Figure 7b****,** une couche de liaison alumino-formeuse 7 est intercalée entre le substrat 1 et la couche anti-CMAS 2.

Sur la **Figure 7c****,** une couche de barrière thermique 8 est intercalée entre la couche de liaison 7 et la couche anti-CMAS 2. Le dépôt anti-CMAS 2 peut être une couche de fonctionnalisation ne jouant pas le rôle de barrière thermique.

Sur la **Figure 7d****,** le substrat 1 est formé en composite matrice céramique (CMC). Le substrat est recouvert d'une couche 7 de liaison, d'une couche 9 de barrière thermique et environnementale (TEBC) et d'une couche 2 de dépôt anti-CMAS.

Les pièces des Figures 7a à 7d présentent, conformément à la description ci-avant, des interfaces mécaniquement fragilisées favorisant une fissuration dans des plans sensiblement parallèles à la surface de la pièce. d'une couche 9 de barrière thermique et environnementale (TEBC) et d'une couche 2 de dépôt anti-CMAS.

Les pièces des Figures 7a à 7d présentent, conformément à la description ci-avant, des interfaces mécaniquement fragilisées favorisant une fissuration dans des plans sensiblement parallèles à la surface de la pièce.

## Revendications

1. Pièce de turbomachine comprenant :
- un substrat en matériau métallique, ou en matériau composite,
- une couche de revêtement de protection contre l'infiltration de composés de type oxydes de calcium, magnésium, aluminium ou silicium, ou CMAS, la couche de revêtement recouvrant au moins partiellement la surface du substrat,
la couche de revêtement comprenant une pluralité de couches élémentaires,
chaque couche élémentaire présentant une composition chimique sensiblement homogène et des caractéristiques physico-chimiques sensiblement homogènes,
des couches élémentaires d'un premier ensemble de couches élémentaires étant intercalées entre des couches élémentaires d'un deuxième ensemble de couches élémentaires, chaque couche élémentaire du premier ensemble et chaque couche élémentaire du deuxième ensemble comprenant un composé anti-CMAS,
la pièce étant **caractérisée en ce que** chaque couche élémentaire du premier ensemble présente une ténacité qui diffère d'au moins 0,7 Mpa.m^{1/2,} ou un coefficient de dilatation thermique qui diffère d'au moins 3,5 10⁻⁶ K⁻¹, respectivement par rapport aux ténacités ou aux coefficients de dilatation thermique de toutes les couches élémentaires du deuxième ensemble,
chaque zone de contact entre une couche élémentaire du premier ensemble et une couche élémentaire du deuxième ensemble formant une interface favorisant la propagation de fissures le long de ladite interface.

2. Pièce de turbomachine selon la revendication 1, dans laquelle les couches élémentaires du premier ensemble présentent une ténacité comprise entre 0,5 et 1,5 Mpa.m^{1/2} et les couches élémentaires du deuxième ensemble présentent une ténacité comprise entre 1,5 et 2,2 Mpa.m^{1/2.}

3. Pièce selon l'une des revendications 1 ou 2, dans laquelle les couches élémentaires du premier ensemble comprennent un matériau pris parmi la liste suivante : RE2Zr2O7 avec RE un matériau de la famille des terres rares, Ba(Mg1/3Ta2/3)O3, La(Al1/4Mg1/2Ta1/4)O3, ou comprennent un mélange de plusieurs de ces matériaux.

4. Pièce selon l'une des revendications 1 à 3, dans laquelle les couches élémentaires du deuxième ensemble comprennent un matériau pris parmi la liste suivante : YSZ, Y2O3-ZrO2-Ta2O5, BaZrO3, CaZrO3, SrZrO3, ou comprennent un mélange de plusieurs de ces matériaux.

5. Pièce selon la revendication 1, dans laquelle les couches élémentaires du premier ensemble présentent un coefficient de dilatation thermique compris entre 3,5 et 6,0 10⁻⁶ K⁻¹ et les couches élémentaires du deuxième ensemble présentent un coefficient de dilatation thermique compris entre 7,0 et 12,0 10⁻⁶ K⁻¹.

6. Pièce selon l'une des revendications 1 ou 5, dans laquelle les couches élémentaires du premier ensemble comprennent du RE2Si2O7 ou du RE2SiO5 avec RE un matériau de la famille des terres rares, ou comprennent un mélange de ces matériaux.

7. Pièce selon l'une des revendications 1 ou 5, dans laquelle les couches élémentaires du deuxième ensemble comprennent un matériau pris parmi la liste suivante : YSZ, Y2O3-ZrO2-Ta2O5, BaZrO3, CaZrO3, SrZrO3, RE2Zr2O7 avec RE un matériau de la famille des terres rares, Ba(Mg1/3Ta2/3)O3, La(Al1/4Mg1/2Ta1/4)O3, YAG, ou comprennent un mélange de plusieurs de ces matériaux.

8. Pièce selon l'une des revendications 1 à 7, où le rapport de l'épaisseur cumulée des couches élémentaires du premier ensemble sur l'épaisseur cumulée des couches élémentaires du deuxième ensemble est compris entre 1:2 et 2:1.

9. Pièce selon l'une des revendications 1 à 8, où l'épaisseur totale de la couche de revêtement de protection est comprise entre 20 et 500 µm, préférentiellement entre 20 et 300 µm.

10. Pièce selon l'une des revendications 1 à 9, formant une aube mobile de turbine, ou un distributeur de turbine haute pression, ou un anneau de turbine haute pression, ou une paroi de chambre de combustion.

11. Procédé de traitement d'une pièce de turbomachine comprenant des étapes de dépôt par projection thermique d'une pluralité de couches élémentaires, à la surface d'un substrat de la pièce, le substrat étant formé en matériau métallique, ou en matériau composite, pour produire une couche de revêtement de protection contre l'infiltration de composés de type CMAS,
dans lequel des étapes de dépôt à la surface du substrat de couches élémentaires appartenant à un premier ensemble sont intercalées entre des étapes de dépôt de couches élémentaires appartenant à un deuxième ensemble,
le procédé étant **caractérisé en ce que** les couches élémentaires du premier ensemble présentent des ténacités qui diffèrent d'au moins 0,7 Mpa.m^{1/2} par rapport aux ténacités des couches élémentaires du deuxième ensemble,
ou les couches élémentaires du premier ensemble présentent des coefficients de dilatation thermique qui diffèrent d'au moins 3,5 10⁻⁶ K⁻¹ par rapport aux coefficients de dilatation thermique des couches élémentaires du deuxième ensemble.

12. Procédé selon la revendication 11, dans lequel un choc thermique au niveau de la surface de la pièce de turbomachine est provoqué entre le dépôt d'une première couche élémentaire et le dépôt d'une deuxième couche élémentaire successive, ledit choc thermique étant de préférence obtenu par un passage de torche sans refroidissement après dépôt de la première couche élémentaire, et un passage de torche avec refroidissement pour la deuxième couche élémentaire.

## Patentansprüche

1. Turbomaschinenteil, umfassend:
- ein Substrat aus metallischem Material oder aus Verbundmaterial,
- eine Beschichtungsschicht zum Schutz vor dem Eindringen von Verbindungen des Typs Kalzium-, Magnesium-, Aluminium- oder Siliziumoxid oder CMAS, wobei die Beschichtungsschicht die Oberfläche des Substrats zumindest teilweise bedeckt,
wobei die Beschichtungsschicht eine Vielzahl von Elementarschichten umfasst,
wobei jede Elementarschicht eine im Wesentlichen homogene chemische Zusammensetzung und im Wesentlichen homogene physikalisch-chemische Eigenschaften aufweist,
wobei Elementarschichten einer ersten Elementarschichtanordnung zwischen Elementarschichten einer zweiten Elementarschichtanordnung eingefügt sind, wobei jede Elementarschicht der ersten Anordnung und jede Elementarschicht der zweiten Anordnung eine Anti-CMAS-Verbindung umfasst,
wobei das Teil **dadurch gekennzeichnet ist, dass** jede Elementarschicht der ersten Anordnung eine Zähigkeit aufweist, die sich um mindestens 0,7 MPa.m^{1/2} unterscheidet oder einen Wärmeausdehnungskoeffizienten, der sich um mindestens 3,5 10⁻⁶ K⁻¹ unterscheidet, jeweils im Verhältnis zu den Zähigkeiten oder zu den Wärmeausdehnungskoeffizienten aller Elementarschichten der zweiten Anordnung,
wobei jeder Kontaktbereich zwischen einer Elementarschicht der ersten Anordnung und einer Elementarschicht der zweiten Anordnung eine Grenzfläche bildet, die die Ausbreitung von Rissen entlang der Grenzfläche begünstigt.

2. Turbomaschinenteil nach Anspruch 1, wobei die Elementarschichten der ersten Anordnung eine Zähigkeit zwischen 0,5 und 1,5 Mpa.m^{1/2} aufweisen und die Elementarschichten der zweiten Anordnung eine Zähigkeit zwischen 1,5 und 2,2 Mpa.m^{1/2} aufweisen.

3. Teil nach einem der Ansprüche 1 oder 2, wobei die Elementarschichten der ersten Anordnung ein Material aus der folgenden Liste umfassen: RE2Zr2O7 mit RE als Material aus der Familie der Seltenen Erden, Ba(Mg1/3Ta2/3)O3, La(Al1/4Mg1/2Ta1/4)O3 oder eine Mischung aus mehreren dieser Materialien umfassen.

4. Teil nach einem der Ansprüche 1 bis 3, wobei die Elementarschichten der zweiten Anordnung ein Material aus der folgenden Liste umfassen: YSZ, Y2O3-ZrO2-Ta2O5, BaZrO3, CaZrO3, SrZrO3 oder eine Mischung aus mehreren dieser Materialien umfassen.

5. Teil nach Anspruch 1, wobei die Elementarschichten der ersten Anordnung einen Wärmeausdehnungskoeffizienten zwischen 3,5 und 6,0 10⁻⁶ K⁻¹ aufweisen und die Elementarschichten der zweiten Anordnung einen Wärmeausdehnungskoeffizienten zwischen 7,0 und 12,0 10⁻⁶ K⁻¹ aufweisen.

6. Teil nach einem der Ansprüche 1 oder 5, wobei die Elementarschichten der ersten Anordnung RE2Si207 oder RE2SiO5 mit RE als ein Material aus der Familie der Seltenen Erden umfassen oder eine Mischung dieser Materialien umfassen.

7. Teil nach einem der Ansprüche 1 oder 5, wobei die Elementarschichten der zweiten Anordnung ein Material aus der folgenden Liste umfassen: YSZ, Y2O3-ZrO2-Ta2O5, BaZrO3, CaZrO3, SrZrO3, RE2Zr2O7 mit RE als ein Material aus der Familie der Seltenen Erden, Ba(Mg1/3Ta2/3)O3, La(Al1/4Mg1/2Ta1/4)O3, YAG oder eine Mischung aus mehreren dieser Materialien umfassen.

8. Teil nach einem der Ansprüche 1 bis 7, wobei das Verhältnis der kumulierten Dicke der Elementarschichten der ersten Anordnung zur kumulierten Dicke der Elementarschichten der zweiten Anordnung zwischen 1:2 und 2:1 liegt.

9. Teil nach einem der Ansprüche 1 bis 8, wobei die Gesamtdicke der Schutzbeschichtungsschicht zwischen 20 und 500 µm, vorzugsweise zwischen 20 und 300 µm, liegt.

10. Teil nach einem der Ansprüche 1 bis 9, das eine bewegliche Turbinenlaufschaufel oder einen Hochdruckturbinenleitapparat oder einen Hochdruckturbinenring oder eine Brennkammerwand bildet.

11. Verfahren zur Behandlung eines Turbomaschinenteils, umfassend die Schritte des Aufbringens einer Vielzahl von Elementarschichten auf die Oberfläche eines Substrats des Teils durch thermische Projektion, wobei das Substrat aus metallischem Material oder aus Verbundmaterial gebildet ist, um eine Beschichtungsschicht zum Schutz gegen das Eindringen von Verbindungen des CMAS-Typs herzustellen,
wobei Schritte des Aufbringens von Elementarschichten auf die Oberfläche des Substrats, die zu einer ersten Anordnung gehören, zwischen Schritten des Aufbringens von Elementarschichten, die zu einer zweiten Anordnung gehören, eingefügt werden,
wobei das Verfahren **dadurch gekennzeichnet ist, dass** die Elementarschichten der ersten Anordnung Zähigkeiten aufweisen, die sich um mindestens 0,7 Mpa.m^{1/2} von den Zähigkeiten der Elementarschichten der zweiten Anordnung unterscheiden,
oder die Elementarschichten der ersten Anordnung Wärmeausdehnungskoeffizienten aufweisen, die sich um mindestens 3,5 10⁻¹ K⁻¹ von den Wärmeausdehnungskoeffizienten der Elementarschichten der zweiten Anordnung unterscheiden.

12. Verfahren nach Anspruch 11, wobei ein thermischer Schock an der Oberfläche des Turbomaschinenteils zwischen dem Aufbringen einer ersten Elementarschicht und dem Aufbringen einer nachfolgenden zweiten Elementarschicht hervorgerufen wird, wobei der thermische Schock vorzugsweise durch einen Brennerdurchgang ohne Kühlung nach dem Aufbringen der ersten Elementarschicht und einen Brennerdurchgang mit Kühlung für die zweite Elementarschicht erreicht wird.

## Claims

1. Turbomachine part comprising :
- a substrate of metallic or composite material,
- a coating layer to protect against the infiltration of compounds such as calcium, magnesium, aluminium or silicon oxides, or CMAS, the coating layer at least partially covering the surface of the substrate, the coating layer comprising a plurality of elementary layers,
each elementary layer having a substantially homogeneous chemical composition and substantially homogeneous physicochemical characteristics,
elemental layers of a first set of elemental layers being sandwiched between elemental layers of a second set of elemental layers, each elemental layer of the first set and each elemental layer of the second set comprising an anti-CMAS compound,
the part being **characterised in that** each elementary layer of the first assembly has a tenacity which differs by at least 0.7 Mpa.m^{1/2}, or a coefficient of thermal expansion which differs by at least 3.5 10⁻⁶K⁻¹, respectively with respect to the tenacities or the coefficients of thermal expansion of all the elementary layers of the second assembly,
each zone of contact between an elementary layer of the first assembly and an elementary layer of the second assembly forming an interface which encourages the propagation of cracks along said interface.

2. A turbomachine part as claimed in claim 1, in which the elementary layers of the first assembly have a toughness of between 0.5 and 1.5 Mpa.m^{1/2} and the elementary layers of the second assembly have a toughness of between 1.5 and 2.2 Mpa.m^{1/2}.

3. Part according to one of claims 1 or 2, in which the elementary layers of the first assembly comprise a material taken from the following list : RE2Zr207 with RE a material from the rare earths family, Ba(Mg1/3Ta2/3)O3, La(Al1/4Mg1/2Ta1/4)O3, or comprise a mixture of several of these materials.

4. Part according to one of claims 1 to 3, in which the elementary layers of the second assembly comprise a material taken from the following list: YSZ, Y203-Zr02-Ta205, BaZr03, CaZr03, SrZr03, or comprise a mixture of several of these materials.

5. A part according to claim 1, wherein the elemental layers of the first assembly have a coefficient of thermal expansion of between 3.5 and 6.0 10⁻⁶ K⁻¹ and the elemental layers of the second assembly have a coefficient of thermal expansion of between 7.0 and 12.0 10⁻⁶ K⁻¹.

6. A part according to one of claims 1 or 5, in which the elementary layers of the first assembly comprise RE2Si207 or RE2SiO5 with RE a material from the rare earth family, or comprise a mixture of these materials.

7. Part according to one of claims 1 or 5, in which the elementary layers of the second assembly comprise a material taken from the following list: YSZ, Y203-Zr02-Ta205, BaZr03, CaZr03, SrZrO3, RE2Zr2O7 with RE a material from the rare earths family, Ba(Mg1/3Ta2/3)O3, La(Al1/4Mg1/2Ta1/4)O3, YAG, or comprise a mixture of several of these materials.

8. Part according to one of claims 1 to 7, wherein the ratio of the cumulative thickness of the elementary layers of the first assembly to the cumulative thickness of the elementary layers of the second assembly is between 1:2 and 2:1.

9. Part according to any of claims 1 to 8, wherein the total thickness of the protective coating layer is between 20 and 500 µm, preferably between 20 and 300 µm.

10. Part according to one of claims 1 to 9, forming a turbine moving blade, or a high-pressure turbine nozzle, or a high-pressure turbine ring, or a combustion chamber wall.

11. A method of treating a turbomachine part, comprising the steps of depositing a plurality of elementary layers on the surface of a substrate of the part by thermal spraying, the substrate being formed from a metallic material or a composite material , in order to produce a protective coating layer against the infiltration of compounds of the CMAS type,
in which steps for depositing elementary layers belonging to a first set on the surface of the substrate are interposed between steps for depositing elementary layers belonging to a second set,
the process being **characterised in that** the elementary layers of the first set tenacities which differ by at least 0.7 Mpa.m^{1/2} from the tenacities of the elementary layers of the second set,
or the elementary layers of the first assembly coefficients of thermal expansion which differ by at least 3.5 10⁻⁶ K⁻¹ from the coefficients of thermal expansion of the elementary layers of the second assembly.

12. Method according to claim 11, in which a thermal shock at the surface of the turbomachine part is caused between the deposition of a first elemental layer and the deposition of a second successive elemental layer, the thermal shock preferably being obtained by a torch pass without cooling after deposition of the first elemental layer, and a torch pass with cooling for the second elemental layer.
